# EUROPÄISCHE PATENTSCHRIFT

(11) **EP 1 573 733 B1**
(45) Veröffentlichungstag und Bekanntmachung des Hinweises auf die Patenterteilung: **02.08.2006**
(21) Anmeldenummer: 03780078.6
(22) Anmeldetag: 28.11.2003
(51) Int. Cl.: G11B 17/10, B65G 59/06

(54) **VERFAHREN UND VORRICHTUNG ZUM ENTNEHMEN UND EINSETZEN EINER PLATTE VON UNTEN AUS EINEM BZW. IN EINEN PLATTENSTAPEL**
METHOD AND DEVICE FOR REMOVING AND INSERTING A DISC FROM AND INTO A STACK OF DISCS FROM BELOW
PROCEDE ET DISPOSITIF POUR RETIRER UN PLATEAU D'UNE PILE DE PLATEAUX PAR LE BAS ET INSERER UN PLATEAU DANS UNE PILE DE PLATEAUX PAR LE BAS

(30) Priorität: 18.12.2002 DE 10259378
(43) Veröffentlichungstag der Anmeldung: 14.09.2005
(73) Patentinhaber: Steag HamaTech AG, 75447 Sternenfels (DE)
(72) Erfinder: KERN, Thomas, 75038 Oberderdingen (DE); GUTSCHER, Jochen, 75428 Illingen (DE); MAHNER, Bernd, 75417 Mühlacker (DE); WAGNER, Roland, 75015 Bretten (DE)
(74) Vertreter: Wagner & Geyer
(86) Internationale Anmeldenummer: PCT/EP2003/013386
(87) Internationale Veröffentlichungsnummer: WO 2004/055806

(56) Entgegenhaltungen:
- DE-A- 4 109 293
- DE-C- 4 223 813
- US-A- 2 288 526
- US-A- 4 971 514
- US-A- 5 518 361
- US-A- 6 164 961

## Beschreibung

Die Erfindung betrifft ein Verfahren zum Entnehmen wenigstens einer Platte von unten aus einem Plattenstapel, sowie ein Verfahren zum Einsetzen einer Platte von unten in einen Plattenstapel. Die Erfindung betrifft weiterhin eine Vorrichtung zum Entnehmen und Einsetzen einer Platte von unten aus einem bzw. in einen Plattenstapel.

Bei der Behandlung oder Fertigung von Platten, beispielsweise bei der Behandlung und Fertigung von optischen Datenträgern wie CDs oder DVDs ist es erforderlich oder vorteilhaft, die Platten in einem Plattenstapel anzuordnen und in dieser Stapelform beispielsweise mit einem Kühl- oder Aufheizmittel, etwa Kühl- oder Heißluft, zu behandeln, um die Platten über ihre Flächen hinweg möglichst gleichmäßig zu behandeln, etwa abzukühlen oder aufzuheizen. Die Stapelbearbeitung ist unter anderem deshalb vorteilhaft, weil sie im Gegensatz zur Behandlung auf einem Laufband oder einem sonstigen horizontalen Transport mit einem geringen Flächen- und Raumbedarf auskommt.

Ein Verfahren mit den Merkmalen des Oberbegriffs der Ansprüche 1 und 8 ist von Dokument DE 4109293 bekannt.

Der Erfindung liegt daher die Aufgabe zugrunde, bei einer Stapelbe- oder verarbeitung von Platten das Entnehmen und Einsetzen von Platten aus dem Plattenstapel bzw. in den Plattenstapel auf einfache Weise und dennoch zuverlässig vorzunehmen.

Diese Aufgabe wird im Verfahren vom Anspruch 1 und mit der Vorrichtung vom Anspruch 8 gelöst.

Gemäß einer Lösung dieser Aufgabe weist das erfindungsgemäße Verfahren folgende Verfahrensschritte auf:
a) Haltern des Plattenstapels mit wenigstens zwei Rasten, auf denen Randbereiche der untersten Platte des Plattenstapels aufliegen,
b) Anheben des Plattenstapels, sodass die Rasten von der untersten Platte frei kommen,
c) horizontales Bewegen der Rasten aus dem Bereich des Plattenstapels,
d) Absenken des Plattenstapels soweit, dass sich die Rasten in einem Höhenbereich zwischen der untersten und der benachbarten, darüberliegenden Platte befinden,
e) horizontales Bewegen der Rasten in den Zwischenraum zwischen der untersten und der benachbarten, darüberliegenden Platte, und
f) weiteres Absenken des Plattenstapels, bis die zweiunterste Platte auf den Rasten aufliegt.

Die gestellte Aufgabe wird bei einem Verfahren zum Einsetzen einer Platte von unten in einen Plattenstapel durch folgende Verfahrensschritte gelöst:
g) Transportieren der einzusetzenden Platte unter den Plattenstapel,
e) Anheben der einzusetzenden Platte, bis der Plattenstapel auf der einzusetzenden Platte aufliegt,
f) weiteres Anheben der einzusetzenden Platte und dem auf ihr aufliegenden Plattenstapel, so dass die unterste Platte des Plattenstapels von den Plattenstapel tragenden Rasten freikommt,
g) horizontales Bewegen der Rasten aus dem Bereich des Plattenstapels,
h) weiteres Anheben der einzusetzenden Platte mit dem auf ihr aufliegenden Plattenstapel, bis sich die Rasten in einem Höhenbereich unterhalb der einzusetzenden Platte befinden,
i) horizontales Bewegen der Rasten unter die einzusetzende Platte, und
k) Absenken der einzusetzenden Platte und des auf ihr aufliegenden Plattenstapels, bis sie auf den Rasten aufliegt.

Mit den erfindungsgemäßen Maßnahmen ist eine zuverlässige Entnahme von Platten aus einem Plattenstapel und ein zuverlässiges Zuführen von Platten in einen Plattenstapel auf einfache Weise möglich. Besonders vorteilhaft ist dabei eine Ausführungsform, bei der sowohl die Verfahrensschritte a) bis f) zur Entnahme von Platten also auch die Verfahrensschritte g) bis k) mit derselben Vorrichtung durchgeführt werden.

Bei einer vorteilhaften Ausführungsform des erfindungsgemäßen Verfahrens werden die Rasten aus dem Bereich des Plattenstapels bewegt, wenn eine Platte an ihnen vorbei angehoben oder abgesenkt wird. Jede zu entnehmende oder einzusetzende Platte kollidiert daher nicht mit den Rasten, die zur Halterung und Auflage des Plattenstapels vorgesehen sind.

Gemäß einer besonders vorteilhaften Ausführungsform der Erfindung wird der Plattenstapel pro Entnahme- und/oder Einsetz-Vorgang um einen vorgegebenen Drehwinkel, beispielsweise um 30°, gedreht. Wenn diese Drehung jeweils in einer Drehrichtung vorgenommen wird, ergibt sich bei einer schrittweisen Drehung um 30° eine Gesamtdrehung des Stapels um 360° nach 12 Vorgängen zum Entnehmen bzw. zum Einsetzen einer Platte. Dieser Drehvorgang, für den zusätzliche aktive Antriebe erforderlich sind, ermöglicht eine gleichmäßige Beaufschlagung der Platten im Plattenstapel mit einem Behandlungsmittel, beispielsweise mit einem Kühlstrom, auf allen Seiten des Stapels und der Platten, sodass eine gleichmäßige Behandlung sämtlicher Platten innerhalb des Plattenstapels gewährleistet ist.

Eine weitere bevorzugte Ausführungsform der erfindungsgemäßen Verfahren besteht darin, dass die Drehbewegung mit dem horizontalen Bewegen der Raste in den und/oder aus dem Bereich des Plattenstapels kombiniert wird. Durch die Drehbewegung wird gemäß dieser Ausführungsform also die Horizontalbewegung der Rasten mit bewirkt. Vorteilhaft ist es auch, das horizontale Bewegen der Rasten mit dem Anheben und/oder Absenken der zu entnehmenden oder einzusetzenden Platte zu kombinieren und/oder zu bewirken. Auch dadurch ist ein aktives Betätigen der Rasten und damit eine eigene Antriebseinrichtung für die Rastenbewegung nicht erforderlich.

Eine weitere bevorzugte Ausführungsform der erfindungsgemäßen Verfahren besteht darin, dass eine einem ersten Plattenstapel entnommene Platte in einen benachbarten Plattenstapel eingesetzt wird. Auf diese Weise ist es möglich, die Platten in einem Plattenstapel von oben nach unten, und im benachbarten Plattenstapel von unten nach oben zu transportieren, sodass sich eine Art Plattenkreislauf ergibt. Zum Zu- und Abführen der einzusetzenden bzw. entnommenen Platten zum oder vom Plattenstapel werden diese vorzugsweise horizontal transportiert. Bei der Ausführungsform, bei der eine von einem Plattenstapel entnommene Platte in einen benachbarten Plattenstapel eingesetzt wird, wird die zunächst entnommene und dann wieder einzusetzende Platte vom ersten Plattenstapel zum zweiten Plattenstapel unterhalb der Plattenstapel, beispielsweise mit einem Transportband, horizontal transportiert.

Die gestellte Aufgabe wird weiterhin mit einer Vorrichtung zum Entnehmen und Einsetzen einer Platte von unten aus einem bzw. in einen Plattenstapel gelöst durch wenigstens eine Hebe-Einrichtung zum vertikalen Anheben und Absenken einer Platte und/oder eines Plattenstapels und durch wenigstens zwei Plattenhalte-Einrichtungen mit jeweils wenigstens einer Raste zum Halten der Platten oder des Plattenstapels. Das Entnehmen und Einsetzen einer Platte aus einem bzw. in einen Plattenstapel erfolgt demgemäß mit derselben Vorrichtung, sodass die Kosten der Vorrichtung und insbesondere deren Wartungskosten aufgrund des geringen apparativen Aufwands und der geringen Anzahl von Bauelementen niedrig ist.

Die Hebeeinrichtung weist vorzugsweise eine Plattenauflage auf, die um einen vorgegebenen Drehwinkel drehbar ist. Durch diese Maßnahme ist es möglich, den gesamten Plattenstapel vor, während oder nach dem Entnehmen oder Einsetzen einer Platte schrittweise um einen bestimmten Drehwinkel zu drehen, um dadurch - wie bereits ausgeführt wurde - die Platten innerhalb des Stapels gleichmäßig behandeln zu können.

Gemäß einer vorteilhaften Ausführung weist die Plattenauflage eine horizontale Nockenkurve auf.

Die Raste der Plattenhalte-Einrichtung weist gemäß einer weiteren Ausführungsform der Erfindung eine vertikale Nockenkurve auf, die mit der horizontalen Nokkenkurve der Plattenauflage zusammenwirkt. Lediglich durch Drehen der Plattenauflage und/oder ihrem Anheben oder Absenken wird durch die Nockenkurven die Horizontalbewegung der Raste bewirkt, sodass die Raste während des Vorbeigangs der zu entnehmenden oder einzusetzenden Platte an ihr außerhalb des Plattenstapelbereichs bzw. des Plattenradius liegt.

Die Plattenhalte-Einrichtung, die gemäß diesem Ausführungsbeispiel also eine passive Steuerung, ohne zusätzliche Antriebseinrichtungen zum horizontalen Bewegung der Raste darstellt, weist vorzugsweise eine Vorspanneinrichtung, beispielsweise ein Gewicht oder eine Feder, auf, mit der die vertikale Nockenkurve der Raste an die horizontale Nockenkurve der Plattenauflage angedrückt wird.

Gemäß einer weiteren sehr vorteilhaften Ausführungsform der Erfindung ist die Steuerfläche der horizontalen Nockenkurve so ausgebildet, dass sie bei Drehung der Plattenauflage in einer ersten Drehrichtung die Raste gegen die Vorspanneinrichtung radial nach außen und aus dem Bereich des Plattenstapels drückt, und bei einer Drehung der Plattenauflage in entgegengesetzter Drehrichtung eine gesteuerte Horizontalbewegung der Raste in den Stapelbereich zulässt.

Vorteilhaft ist es, wenn die Steuerfläche der vertikalen Nockenkurve so ausgebildet ist, dass die Raste bei Absenken der Hebe-Einrichtung nach dem Entnehmen einer Platte radial nach innen in den Stapelbereich und bei Anheben der Hebeeinrichtung zum Einsetzen einer Platte radial nach außen aus dem Stapelbereich bewegbar ist. Auf diese Weise ist ohne zusätzliche oder eigene aktive Steuerung der Plattenhalte-Einrichtung sichergestellt, dass sich die Raste bei Vorbeigang einer Platte außerhalb des Plattenradius befindet und die Raste dennoch wieder zu gegebener Zeit unter den Plattenstapel zur Aufnahme desselben gelangt.

Eine weitere vorteilhafte Ausführungsform der erfindungsgemäßen Vorrichtung besteht in einem horizontalen Transportband zum horizontalen Transportieren der entnommenen Platten von einem Plattenstapel und/oder der einzusetzenden Platte unter einen Plattenstapel. Das Transportband ist dabei vorteilhafterweise so ausgebildet, dass die Hebeeinrichtung durch das Transportband hindurch bewegbar ist, sodass dessen Plattenauflage die Platte während des Anhebens vom Transportband aufnimmt und während des Plattenentnahmevorgangs die Platte auf das Transportband ablegt.

Gemäß einer weiteren sehr vorteilhaften Ausgestaltung der Erfindung sind wenigstens zwei Plattenstapel vorgesehen, die nebeneinander angeordnet sind. Dabei ist es besonders vorteilhaft, wenn die Hebeeinrichtungen eine gemeinsame Hub-Antriebseinrichtung und/oder die Plattenauflagen der mindestens zwei Hebeeinrichtungen eine gemeinsame Dreh-Antriebsvorrichtung aufweisen.

Insbesondere im Zusammenhang mit dem Transport von Scheiben oder Substraten, beispielsweise von CDs oder DVDs, sind die Platten als Paletten zur Aufnahme derartiger Scheiben oder Substrate ausgebildet. Um Wiederholungen hinsichtlich derartiger als Paletten ausgebildeter Platten zu vermeiden, wird auf die deutsche Anmeldung Nr. 101 62 957 derselben Anmelderin verwiesen, deren Gegenstand insofenr zum Inhalt der vorliegenden Anmeldung gemacht wird.

In diesem Falle weisen die Platten im Mittelbereich einen vertikalen nach oben abstehenden Zapfen zum Zentrieren auf. Vorzugsweise sind - wie in der genannten früheren Patentanmeldung beschrieben - die Außenbereiche der Platten im Plattenstapel zueinander beabstandet. Die Scheiben oder Substrate sind vorzugsweise optische Datenträger wie CDs oder DVDs.

Sehr vorteilhaft ist eine Ausführung der erfindungsgemäßen Vorrichtung, bei der der Plattenstapel in einem Zylinder angeordnet ist, in dem die Platten, Paletten und/oder Scheiben einem Behandlungsstrom, beispielsweise einem Kühlmittel- oder Heißluftstrom, ausgesetzt sind.

Die Erfindung wird nachfolgend anhand bevorzugter Ausführungsbeispiele unter Bezugnahme auf die Figuren weiter erläutert. Es zeigen:
- Fig. 1: eine schematische perspektivische Darstellung der gesamten Anlage, jedoch ohne eine Antriebsvorrichtung für eine Platten-Hebeeinrichtung,
- Fig.2: eine Seitenansicht der in Figur 1 dargestellten Vorrichtung einschließlich Antriebsvorrichtung für die Hebeeinrichtung,
- Fig. 3: eine schematische perspektivische Ansicht von Teilen der in Figur 1 und 2 dargestellten Vorrichtung zur Erläuterung der Hebe- und der Plattenhalte-Einrichtung sowie deren Funktionen und Bewegungsabläufe,
- Fig. 4: eine schematische Seitenansicht der Hebe- und Plattenhalte-Einrichtung in der abgesenkten Grundstellung der Hebeeinrichtung, mit den Rasten in verriegelter Position,
- Fig. 5: die in Fig. 4 dargestellte Ansicht, jedoch in der angehobenen Grundstellung der Hebeeinrichtung, mit den Rasten in entriegelter Position,
- Fig. 6: eine Aufsichtsdarstellung der Hebe- und Plattenhalte-Einrichtung bei verriegelter Rastenposition, und
- Fig. 7: eine Figur 6 entsprechende Darstellung bei entriegelter Rastenposition.

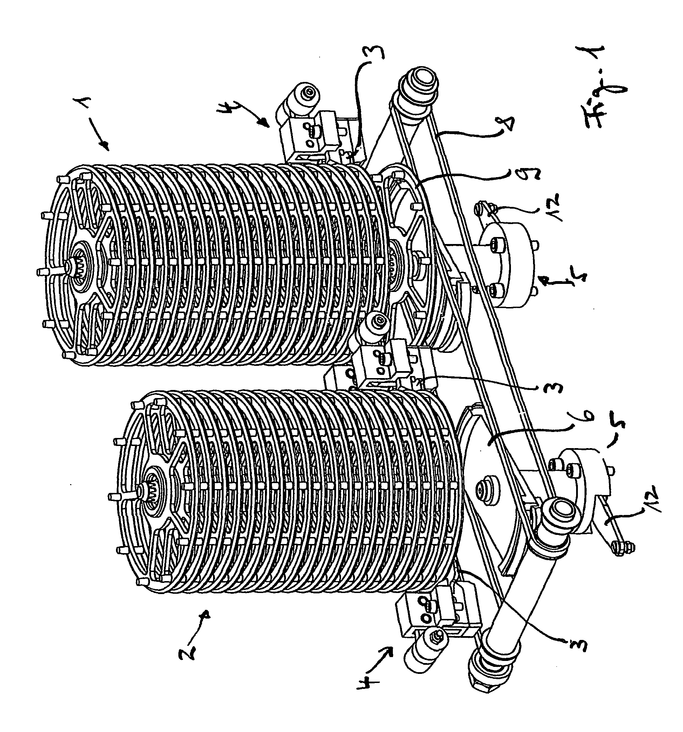

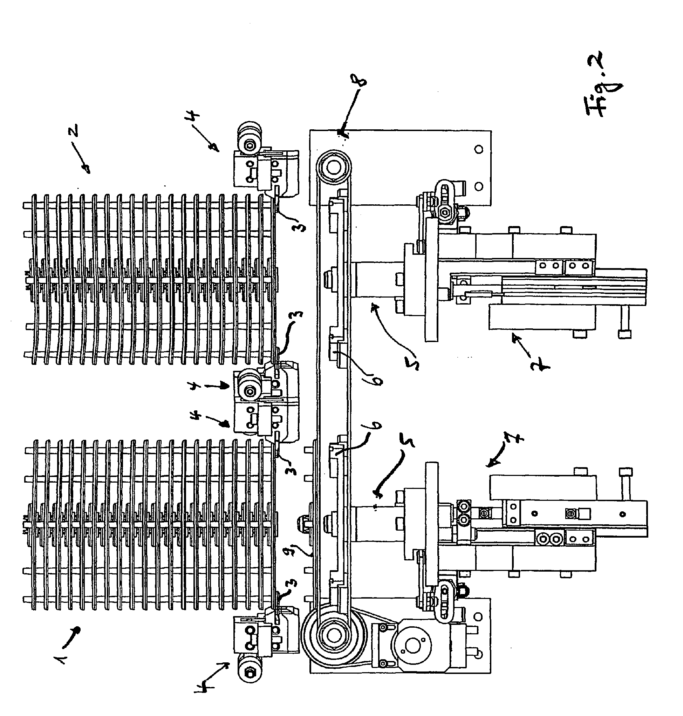

Gemäß den Figuren 1 und 2 sind bei den dargestellten Ausführungsbeispielen zwei Plattenstapel 1, 2 nebeneinander angeordnet. Die Plattenstapel liegen auf Rasten 3 von Plattenhalte-Einrichtungen 4 auf. Unterhalb des jeweiligen Plattenstapels ist jeweils eine Hebeeinrichtung 5 mit einer Plattenauflage 6 vorgesehen, die mittels einer Antriebsvorrichtung 7 anheb- und absenkbar ist.

Unterhalb der Plattenstapel 1, 2 befindet sich ein Transportband 8, mit dem eine zu entnehmende oder einzusetzende Platte 9 unter den Plattenstapeln 1 horizontal transportierbar ist. Das Transportband 8 weist Ausnehmungen auf, durch die die Plattenauflage 6 während des Anhebens und Absenkens der Hebeeinrichtung 5 frei hindurch gelangt. Die Plattenauflage 6 nimmt daher beim Anheben die einzusetzende Platte 9 vom Transportband ab und legt die zu entnehmende Platte 9 beim Absenken auf dem Transportband 8 ab.

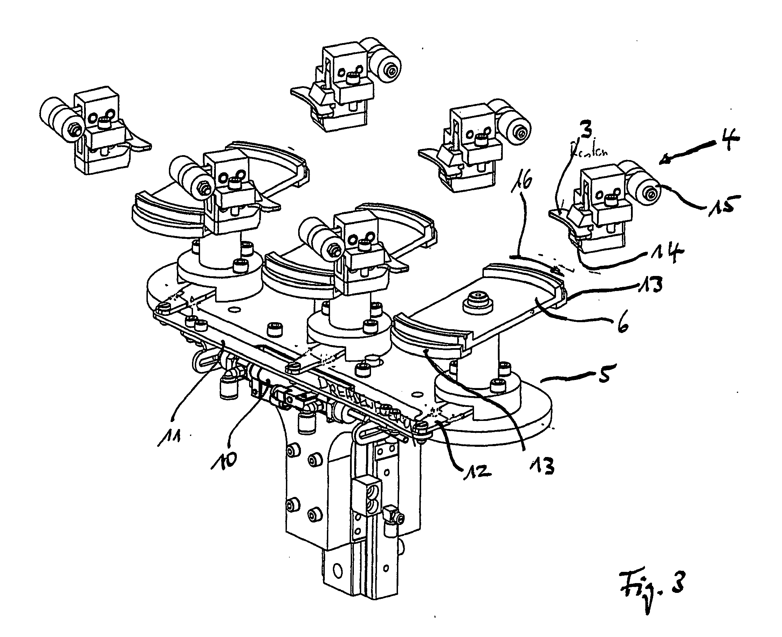

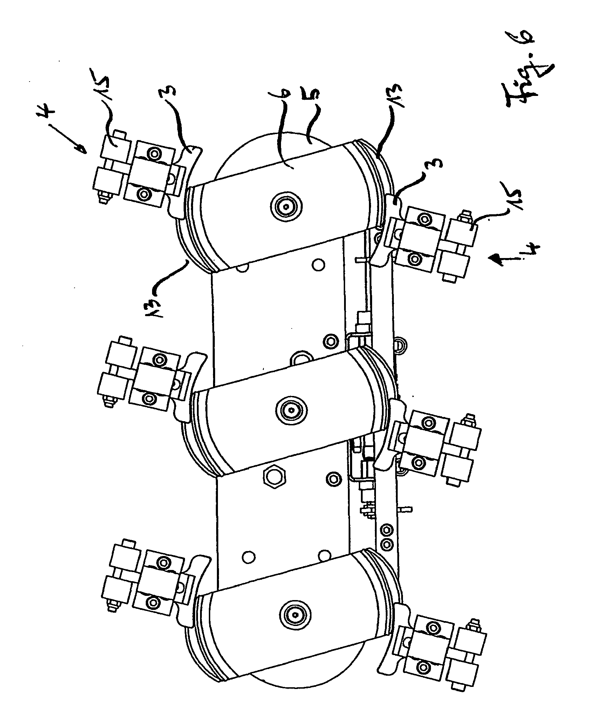

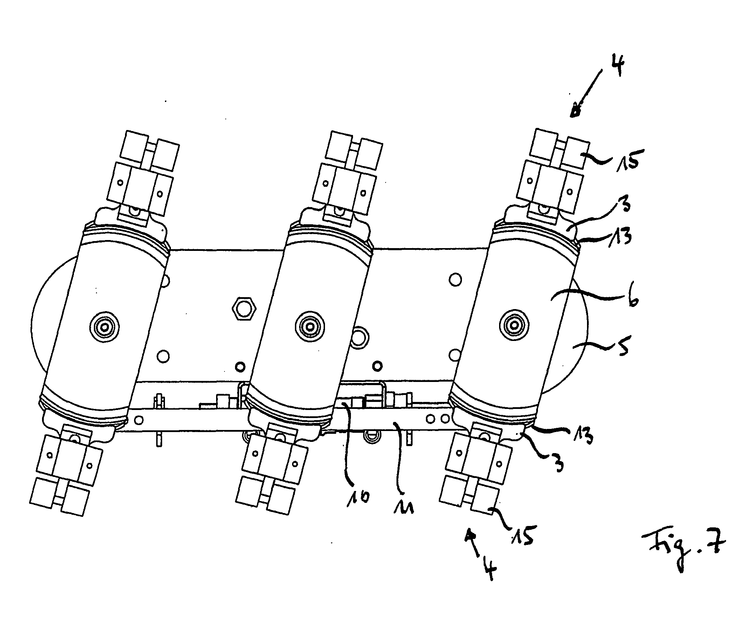

Anhand der Figuren 3 bis 7 werden die Hebe- und Plattenhalte-Einrichtungen 4, 5 sowie deren Einzelheiten nachfolgend beschrieben.

Bei dem dargestellten Ausführungsbeispiel sind drei identische Hebe- und Plattenhalte-Einrichtungen für drei darüber vorgesehene, nicht gezeigte Plattenstapel dargestellt, die paralell nebeneinander angeordnet sind Der Übersichtlichkeit halber wird nachfolgend lediglich eine Hebe- bzw. Platten-Einrichtung mit Bezugszeichen versehen und deren Einzelheiten sowie Funktionsweisen erläutert.

Die Plattenauflage 6 ist mittels eines Zylinders 10 über eine bewegliche Schiene 11 und einen Arm 12 um einen Winkel von 30° hin- und herdrehbar und weist an ihren Außenbereichen jeweils eine horizontale Nockenkurve 13 auf.

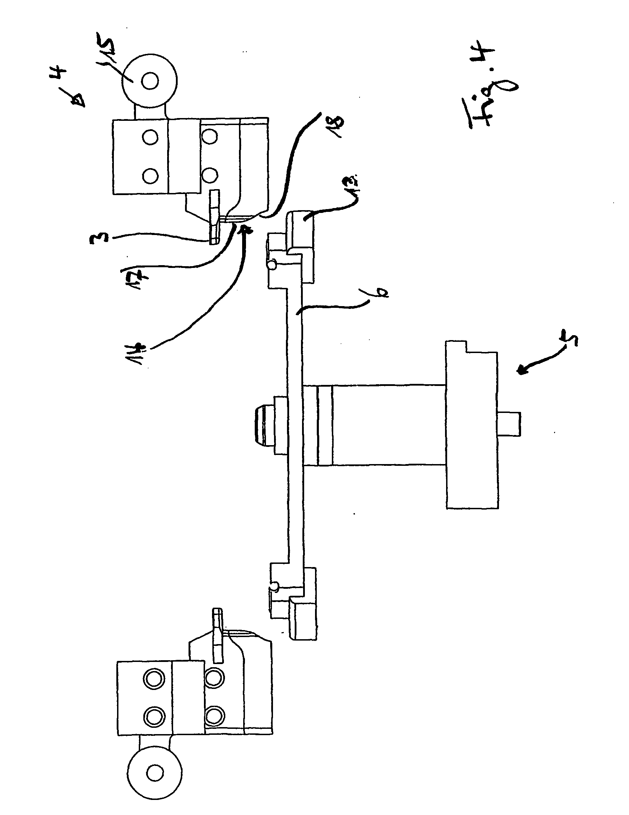

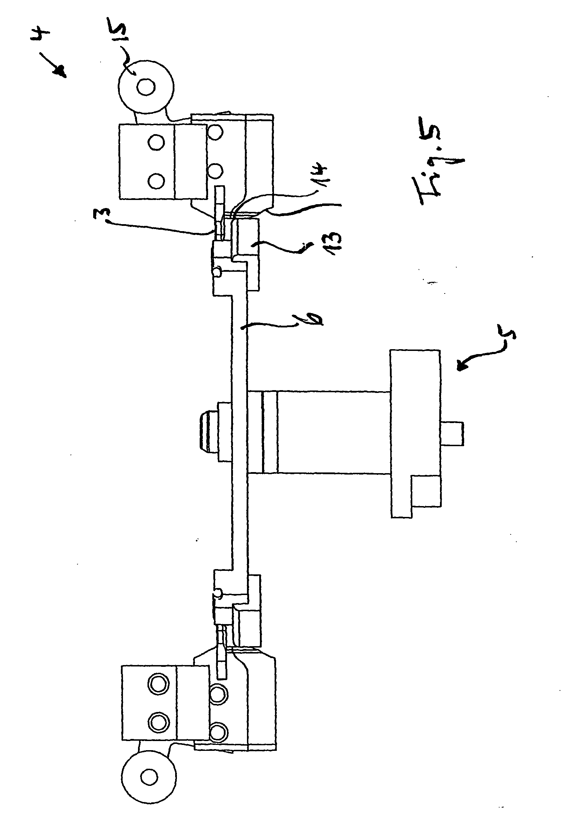

Die Plattenhalte-Einrichtung mit der Raste 3 weist jeweils eine vertikale Nockenkurve 14 auf, wie sie am besten aus den Figuren 4 und 5 ersichtlich ist. Mit einem Gewicht 15 ist die Raste 3 und ihre vertikale Nockenkurve 14 nach innen vorgespannt.

Nachfolgend wird zunächst die Funktionsweise dieses Ausführungsbeispiels für das Entnehmen einer Platte 9 von unten aus dem Plattenstapel 2 beschrieben.

In der Ausgangsstellung liegt der Plattenstapel 2 bzw. deren unterste Platte auf den Rasten 3 auf, wie dies am bestens aus den Figuren 1 und 2 ersichtlich ist. In diesem Zustand wird die Hebeeinrichtung 5 angehoben, sodass die Plattenauflage 6 unter der untersten Platte des Plattenstapels 2 angreift und den gesamten Plattenstapel 2 anhebt, so dass er nicht mehr auf den Rasten 3 aufliegt. Danach wird die Plattenauflage 6 - und damit der gesamte Plattenstapel - mittels des Pneumatik-Zylinders 10, der Schiene 11 und dem Arm 12 in einer Drehrichtung gedreht, wie dies durch den Pfeil 16 angedeutet ist. Da an der horizontalen Nockenkurve 13 und der Plattenauflage 6 die vertikale Nockenkurve 14 der Plattenhalte-Einrichtung 4 aufgrund des Gewichts 15 anliegt, wird bei dieser Drehung die Raste 3 aufgrund der Steuerkurve der horizontalen Nockenkurve 13 nach außen gedrückt, sodass sich die Raste 3 nicht mehr im Bereich des Plattenstapels 2 befindet. In diesem Zustand wird die Hebeeinrichtung 5 mit der Plattenauflage 6 abgesenkt, sodass die horizontale Nockenkurve 13 in der zuvor gedrehten Stellung auf der vertikalen Nockenkurve 14 der Plattenhalte-Einrichtung nach unten gleitet, wie dies am besten aus den Figuren 4 und 5 ersichtlich ist. Die vertikale Nockenkurve 15 weist einen senkrechten Kurvenbereich 17 und einen S-förmigen Kurvenbereich 18 auf, der sich an den senkrechten Kurvenbereich 17 nach unten anschließt. Bei Absenken der Hebeeinrichtung 5 gleitet die horizontale Nockenkurve 13 auf der vertikalen Nockenkurve 14 zunächst am senkrechten Kurvenbereich 17 senkrecht nach unten, und danach auf dem sich daran anschließenden S-förmigen Kurvenbereich 18, dessen Abstand von der Mittelachse der Hebeeinrichtung 5 nach unten hin zunimmt. Die unterste Platte des Plattenstapels gelangt daher unter die Raste 3, die danach aufgrund des Kurvenverlaufs des S-förmigen Kurvenbereichs 18 wieder in den Bereich des Plattenstapels unterhalb der nächsthöheren Platte gelangt. Durch weiteres Absenken der Plattenauflage 6 wird der restliche Plattenstapel wieder auf die Raste 3 abgesetzt. Die Hebeeinrichtung 5 wird weiter nach unten gefahren, und die vom Plattenstapel entnommene Platte 9 auf das Transportband 8 abgelegt wird.

Das Einsetzen einer Platte in einen Plattenstapel läuft in umgekehrter Reihenfolge zu der zuvor für das Entnehmen einer Platte beschrieben Reihenfolge ab. Die Plattenauflage 6, die sich in Grundstellung unterhalb des Transportbands 8 befindet, wird mit der Hebeeinrichtung 5 angehoben, nimmt die einzusetzende Platte 9 vom Transportband 8 ab und hebt sie unter den Plattenstapel 1 an. Der Plattenstapel 1 wird bei weiterem Anheben der Hebeeinrichtung 5 über die einzusetzenden Platte 9 mitangehoben, so dass der Plattenstapel 1 von der Raste 3 der Plattenhalteeinrichtung 4 freikommt. Die horizontale Nockenkurve 13, die beim Anheben auf der vertikalen Nockenkurve 15 gleitet, drückt die Raste 3 aufgrund des Steuerkurvenverlaufs der vertikalen Nocke 15 dabei aufgrund des S-förmigen Kurvenbereichs 18 nach außen, so dass die einzusetzende Platte 9 an der Raste 3 vorbei nach oben angehoben werden kann. In diesem Zustand wird die Plattenauflage 6 in entgegengesetzter Richtung des Pfeils 16 gedreht, so dass die vertikale Nockenkurve 15 auf der horizontalen Nockenkurve 13 gleitet. Da der Radius der horizontalen Nockenkurve 13 bezüglich der Drehachse während des Drehvorgangs kleiner wird, bewegt sich die Raste 3 wieder in den Bereich des Plattenstapels und unterhalb die einzusetzende Platte, die jetzt die unterste Platte des Plattenstapels ist. Durch Absenken der Hebeeinrichtung 5 wird der Plattenstapel wieder auf die Raste 3 aufgesetzt und damit der Einsetzvorgang einer Platte 9 in den Plattenstapel 1 beendet.

Die Plattenauflage 6 wird danach entgegen der Drehrichtung des Pfeils 16 (vgl. Fig. 3) wieder in die Grundstellung gebracht.

Wie aus Figur 1 und 2 ersichtlich ist, wird bei dem dargestellten Ausführungsbeispiel eine Platte von einem ersten Plattenstapel 2 entnommen, mit dem Transportband 8 zum benachbarten Plattenstapel 1 transportiert und dort in den benachbarten Plattenstapel 1 eingesetzt.

Wie aus dem beschriebenen Ausführungsbeispiel ersichtlich ist, ist dieselbe Vorrichtung sowohl für das Entnehmen als auch für das Einsetzen einer Platte aus einem bzw. in einen Plattenstapel 1, 2 verwendbar, da für beide Vorgänge die konstruktiven Merkmale der Vorrichtung identisch sind. Dies ermöglicht eine einfache Konstruktion mit wenig Bauelementen und einem geringen Wartungsaufwand. Aufgrund der jeweiligen schrittweisen Drehung der Plattenauflage 6 um beispielsweise jeweils 30° je Einsatz oder Entnahme einer Platte wird als Zusatzfunktion eine Drehung des gesamten Plattenstapels durchgeführt, was für die gleichmäßige Behandlung des Stapels beispielsweise in einem Kühl- oder Aufheizzylinder besonders vorteilhaft ist.

Bei der dargestellten Ausführungsform reicht das Eigengewicht des Plattenstapels 1,2 für eine ausreichende Reibung aus, um bei einer Drehung der Plattenauflage 6 mitgedreht zu werden. Es ist jedoch auch möglich, zwischen den einzelnen Platten beispielsweise Verzahnungen oder O-Ringe zur reibschlüssigen Mitnahme vorzusehen, um das Mitnehmen der Platten bei der Drehung sicherzustellen. Um Wiederholungen hinsichtlich der Paletten zu vermeiden, die im Zusammenhang mit der vorliegenden Erfindung verwendet werden können, wird auf die bereits genannte deutsche Patentanmeldung Nr. 101 62 957 derselben Anmelderin verwiesen.

## Patentansprüche

1. Verfahren zum Entnehmen und/oder Einsetzen wenigstens einer Platte von unten aus einem bzw. ein einen Plattenstapel (2), wobei der Plattenstapel (2) mit wenigstens zwei Rasten gehalten wird, und die Rasten (3) horizontal aus dem bzw. in den Bereich des Plattenstapels (2) bewegt werden, **dadurch gekennzeichnet, dass** der Plattenstapel (1, 2) pro Entnahme- und/oder Einsetzvorgang um einen vorgegebenen Drehwinkel gedreht wird, und dass die Drehbewegung mit dem horizontalen Bewegen der Rasten (3) in den und/oder aus dem Bereich des Plattenstapels (1, 2) kombiniert wird.

2. Verfahren nach Anspruch 1 zum Entnehmen wenigstens einer Platte von unten aus einem Plattenstapel (2), **gekennzeichnet durch** folgende Verfahrensschritte:
a) Haltern des Plattenstapels (2) mit wenigstens zwei Rasten (3), auf denen Randbereiche der untersten Platte des Plattenstapels (1, 2) aufliegen,
b) Anheben des Plattenstapels (2), so dass die Rasten (3) von der untersten Platte frei kommen,
c) horizontales Bewegen der Rasten (3) aus dem Bereich des Plattenstapels (2),
d) Absenken des Plattenstapels (2) soweit, dass sich die Rasten (3) in einem Höhenbereich zwischen der untersten und der benachbarten darüber liegenden Platte befinden,
e) horizontales Bewegen der Rasten (3) in den Zwischenraum zwischen der untersten und der benachbarten, darüber liegenden Platte, und
f) weiteres Absenken des Plattenstapels (2), bis die zweitunterste Platte auf den Rasten (3) aufliegt.

3. Verfahren nach Anspruch 1, zum Einsetzen einer Platte (9) von unten in einen Plattenstapel (1), **gekennzeichnet durch** folgende Verfahrensschritte:
g) Transportieren der einzusetzenden Platte (9) unter den Plattenstapel (1),
e) Anheben der einzusetzenden Platte (9), bis der Plattenstapel (1) auf der einzusetzenden Platte (9) aufliegt,
f) weiteres Anheben der einzusetzenden Platte (9) und des auf ihr aufliegenden Plattenstapels (1), so dass die unterste Platte des Plattenstapels (1) von den, den Plattenstapel (1) tragenden Rasten (3) freikommt,
g) horizontales Bewegen der Rasten (3) aus dem Bereich des Plattenstapels (1),
h) weiteres Anheben der einzusetzenden Platte (9) mit dem auf ihr aufliegenden Plattenstapel (1), bis sich die Rasten (3) in einem Höhenbereich unterhalb der einzusetzenden Platte (9) befinden,
i) horizontales Bewegen der Rasten (3) unter die einzusetzende Platte (9), und
k) Absenken der einzusetzenden Platte (9) und des auf ihr aufliegenden Plattenstapels (1), bis sie auf dem Rasten (3) aufliegt.

4. Verfahren nach einem der vorhergehenden Ansprüche, **dadurch gekennzeichnet, dass** sowohl die Verfahrensschritte a) bis f) als auch die Verfahrensschritte g) bis k) mit derselben Vorrichtung durchgeführt werden.

5. Verfahren nach einem der vorgehenden Ansprüche, **dadurch gekennzeichnet, dass** die Rasten (3) aus dem Bereich des Plattenstapels (1, 2) bewegt werden, wenn eine Platte an ihnen vorbei angehoben oder abgesenkt wird.

6. Verfahren nach einem der vorgehenden Ansprüche, **dadurch gekennzeichnet, dass** eine einem ersten Plattenstapel (1) entnommene Platte (9) in einen benachbarten Plattenstapel eingesetzt wird.

7. Verfahren nach einem der vorgehenden Ansprüche, **dadurch gekennzeichnet, dass** die entnommene und/oder einzusetzende Platte horizontal transportiert wird.

8. Vorrichtung zum Entnehmen und Einsetzen einer Platte von unten aus einem bzw. in einen Plattenstapel (1, 2) mit
- wenigstens einer Hebe-Einrichtung (5) zum vertikalen Anheben und Absenken einer Platte (9) und/oder eines Plattenstapels (1, 2), und
- wenigstens einer Plattenhalte-Einrichtung (4) mit wenigstens zwei Rasten (3) zum Halten der Platten (9) oder des Plattenstapels (1, 2),
**dadurch gekennzeichnet, dass** die Hebe-Einrichtung (5) eine Plattenauflage (6) aufweist, die um einen vorgegebenen Drehwinkel drehbar ist, und dass die Plattenauflage (6) eine horizontale Nockenkurve (13) aufweist.

9. Vorrichtung nach Anspruch 8, **dadurch gekennzeichnet, dass** die Raste (3) der Plattenhalte-Einrichtung (4) eine vertikale Nockenkurve (14) aufweist, die mit der horizontalen Nockenkurve (13) der Plattenauflage (6) zusammenwirkt.

10. Vorrichtung nach einem der Ansprüche 8 oder 9, **dadurch gekennzeichnet, dass** die Plattenhalte-Einrichtung (4) eine Vorspanneinrichtung (15) zum Andrücken der vertikalen Nockenkurve (14) an die horizontale Nockenkurve (13) der Plattenauflage (6) aufweist.

11. Vorrichtung nach Anspruch 10, **dadurch gekennzeichnet, dass** die Vorspann-Einrichtung (15) ein Gewicht oder eine Feder ist.

12. Nach einem der Ansprüche 8 bis 11, **dadurch gekennzeichnet, dass** die Steuerfläche der horizontalen Nockenkurve (13) so ausgebildet ist, dass sie die Rasten (3) bei Drehung der Plattenauflage (6) in einer ersten Drehbewegung gegen die Vorspanneinrichtung (15) radial nach außen und aus dem Bereich des Plattenstapels (1) rückt, und bei Drehung der Plattenauflage (6) in einer weiteren Drehbewegung eine gesteuerte Horizontalbewegung der Rasten (3) radial nach innen in den Bereich des Plattenstapels (9) zulässt.

13. Vorrichtung nach einem der Ansprüche 8 bis 12, **dadurch gekennzeichnet, dass** die Steuerfläche der vertikalen Nockenkurve (14) so ausgebildet ist, dass die Raste (3) bei Absenken der Hebe-Einrichtung (5) radial nach innen in den Bereich des Plattenstapels (9) und bei Anheben der Hebeeinrichtung (5) radial nach außen aus dem Bereich des Plattenstapels (1) bewegbar ist.

14. Vorrichtung nach einem der Ansprüche 8 bis 13, **gekennzeichnet durch** ein horizontales Transportband (8) zum Transportieren der entnommenen und/oder der einzusetzenden Platte (9).

15. Vorrichtung nach einem der Ansprüche 8 bis 14, **dadurch gekennzeichnet, dass** wenigstens zwei Plattenstapel mit jeweils wenigstens einer Hebeeinrichtung und wenigstens zwei Plattenhalte-Einrichtungen vorgesehen sind.

16. Vorrichtung nach Anspruche 15, **dadurch gekennzeichnet, dass** die Hebeeinrichtungen (5) eine gemeinsame Hub-Antriebs-Einrichtung aufweisen.

17. Vorrichtung nach einem der Ansprüche 15 oder 16, **dadurch gekennzeichnet, dass** die Plattenauflagen (6) der mindestens zwei Hebeeinrichtungen (5) eine gemeinsame Drehantriebs-Vorrichtung (10, 11) aufweisen.

18. Vorrichtung nach einem der Ansprüche 8 bis 17, **dadurch gekennzeichnet, dass** die Platten (9) als Paletten zur Aufnahme von Scheiben oder Substraten ausgebildet sind.

19. Vorrichtung nach einem der Ansprüche 8 bis 18, **dadurch gekennzeichnet, dass** die Platten (9) im Mittelbereich einen vertikal nach oben abstehenden Zapfen aufweisen, der im Plattenstapel (1, 2) die darüberliegenden Platte zentriert.

20. Vorrichtung nach einem der Ansprüche 8 bis 19, **dadurch gekennzeichnet, dass** die Außenbereiche der Platten (9) im Plattenstapel (1, 2) zueinander beabstandet sind.

21. Vorrichtung nach einem der Ansprüche 18 bis 20, **dadurch gekennzeichnet, dass** die Scheiben optische Datenträger sind.

22. Vorrichtung nach einem der Ansprüche 8 bis 21, **dadurch gekennzeichnet, dass** der Stapel in einem Zylinder angeordnet ist, in dem die Platten, Paletten und/oder Scheiben einem Strom eines Behandlungsmittels, insbesondere eines Kühlmittels, ausgesetzt sind.

## Claims

1. Method for removing and/or inserting at least one plate from below respectively from and into a plate stack (2), wherein the plate stack (2) is held by at least two detents and the detents (3) are horizontally moved out of or into the region of the plate stack (2), **characterised in that** the plate stack (1, 2) is rotated for each removal process and/or insertion process through a predetermined rotational angle and that the rotational movement is combined with the horizontal movement of the detents (3) into and/or out of the region of the plate stack (1, 2).

2. Method according to claim 1 for removal of at least one plate from below from a plate stack (2), **characterised by** the following method steps:
a) holding the plate stack (2) by at least two detents (3), on which edge regions of the lowermost plate of the plate stack (1, 2) rest,
b) raising the plate stack (2) so that the detents (3) come free from the lowermost plate,
c) horizontally moving the detents (3) out of the region of the plate stack (2),
d) lowering the plate stack (2) to such an extent that the detents (3) are disposed in a height region between the lowermost plate and the adjacent plate disposed thereabove,
e) horizontally moving the detents (3) into the intermediate space between the lowermost plate and the adjacent plate disposed thereabove and
f) further lowering of the plate stack (2) until the second lowermost plate rests on the detents (3).

3. Method according to claim 1 for insertion of a plate (9) from below into a plate stack (1), **characterised by** the following method steps:
g) transporting the plate (9), which is to be inserted, below the plate stack (1),
e) raising the plate (9), which is to be inserted, until the plate stack (1) rests on the plate (9) to be inserted,
f) further raising the plate (9), which is to be inserted, and the plate stack (1) resting thereon so that the lowermost plate of the plate stack (1) comes free from the detents (3) carrying the plate stack (1),
g) horizontally moving the detents (3) out of the region of the plate stack (1),
h) further raising of the plate (9), which is to be inserted, together with the plate stack (1) resting thereon until the detents (3) are disposed in a height region below the plate (9) to be inserted,
i) horizontally moving the detents (3) below the plate (9) to be inserted and
k) lowering the plate (9), which is to be inserted, and the plate stack (1) resting thereon until they rest on the detents (3).

4. Method according to one of the preceding claims, **characterised in that** not only the method steps a) to f), but also the method steps g) to k) are performed by the same device.

5. Method according to one of the preceding claims, **characterised in that** the detents (3) are moved out of the region of the plate stack (1, 2) when a plate is lifted or lowered past them.

6. Method according to one of the preceding claims, **characterised in that** a plate (9) removed from a first plate stack (1) is inserted into an adjacent plate stack.

7. Method according to one of the preceding claims, **characterised in that** the removed and/or inserted plate is transported horizontally.

8. Device for removing and inserting a plate from below respectively from and into a plate stack (1, 2), with
- at least one lifting device (5) for vertically raising and lowering a plate (9) and/or a plate stack (1, 2) and
- at least one plate holding device (4) with at least two detents (3) for holding the plates (9) or the plate stack (1, 2),
**characterised in that** the lifting device (5) comprises a plate support (6) rotatable about a predetermined rotational angle and that the plate support (6) comprises a horizontal cam (13).

9. Device according to claim 8, **characterised in that** the detent (3) of the plate holding device (4) has a vertical cam (14) co-operating with the horizontal cam (13) of the plate support (6).

10. Device according to one of claims 8 and 9, **characterised in that** the plate holding device (4) comprises a biasing device (15) for pressing the vertical cam (14) against the horizontal cam (13) of the plate support (6).

11. Device according to claim 10, **characterised in that** the biasing device (15) is a weight or a spring.

12. Device according to one of claims 8 to 11, **characterised in that** the control surface of the horizontal cam (13) is so formed that it pushes the detents (3), on rotation of the plate support (6) in a first rotational movement against the biasing direction (15), radially outwardly and out of the region of the plate stack (1) and allows, on rotation of the plate support (6) in a further rotational movement, a controlled horizontal movement of the detents (3) radially inwardly into the region of the plate stack (9).

13. Device according to one of claims 8 to 12, **characterised in that** the control surface of the vertical cam (14) is so formed that the detent (3), on lowering of the lifting device (5), is movable radially inwardly into the region of the plate stack (9) and, on raising of the lifting device (5), radially outwardly out of the region of the plate stack (1).

14. Device according to one of claims 8 to 13, **characterised by** a horizontal transport belt (8) for transporting the removed and/or the inserted plate (9).

15. Device according to one of claims 8 to 14, **characterised in that** at least two plate stacks each with at least one respective lifting device and at least two respective plate holding devices are provided.

16. Device according to claim 15, **characterised in that** the lifting devices (5) have a common stroke drive device.

17. Device according to one of claims 15 and 16, **characterised in that** the plate supports (6) of the at least two lifting devices (5) have a common rotary drive device (10, 11).

18. Device according to one of claims 8 to 17, **characterised in that** the plates (9) are formed as pallets for reception of discs or substrates.

19. Device according to one of claims 8 to 18, **characterised in that** the plates (9) have in the middle region a vertically upwardly protruding pin which centres, in the plate stack (1, 2), the plate disposed thereabove.

20. Device according to one of claims 8 to 19, **characterised in that** the outer regions of the plates (9) are spaced apart in the plate stack (1, 2).

21. Device according to one of claims 18 to 20, **characterised in that** the discs are optical data carriers.

22. Device according to one of claims 8 to 21, **characterised in that** the stack is arranged in a cylinder in which the plates, pallets and/or discs are exposed to a flow of a treatment medium, particularly a coolant.

## Revendications

1. Procédé pour retirer et/ou insérer au moins une plaque par le bas d'une respectivement dans une pile de plaques (2), où la pile de plaques (2) est retenue par au moins deux crans d'arrêt, et les crans d'arrêt (3) sont déplacés horizontalement depuis respectivement dans la zone de la pile de plaques (2), **caractérisé en ce que** la pile de plaques (1, 2), par opération de retrait et/ou d'insertion, est amenée à tourner selon un angle de rotation prédéfini, et **en ce que** le mouvement de rotation est combiné avec le déplacement horizontal des crans d'arrêt (3) dans et/ou de la zone de la pile de plaques (1, 2).

2. Procédé selon la revendication 1 pour retirer au moins une plaque par le bas d'une pile de plaques (2), **caractérisé par** les étapes consistant à :
a) retenir la pile de plaques (2) avec au moins deux crans d'arrêt (3), sur lesquels reposent des zones de bord de la plaque la plus inférieure de la pile de plaques (1, 2),
b) relever la pile de plaques (2) de sorte que les crans d'arrêt (3) se dégagent de la plaque la plus inférieure,
c) déplacer horizontalement les crans d'arrêt (3) de la zone de la pile de plaques (2),
d) abaisser la pile de plaques (2) suffisamment pour que les crans d'arrêt (3) se trouvent dans une zone de hauteur entre la plaque la plus inférieure et la plaque avoisinante située au dessus,
e) déplacer horizontalement les crans d'arrêt (3) dans l'espace intermédiaire entre la plaque la plus inférieure et la plaque avoisinante située au dessus et,
f) abaisser encore la pile de plaques (2) jusqu'à ce que la deuxième plaque depuis le bas repose sur les crans d'arrêt (3).

3. Procédé selon la revendication 1, pour insérer une plaque (9) par le bas dans une pile de plaques (1), **caractérisé par** les étapes consistant à :
g) transporter la plaque à insérer (9) sous la pile de plaques (1),
e) relever la plaque à insérer (9) jusqu'à ce que la pile de plaques (1) repose sur la plaque à insérer (9),
f) relever encore la plaque à insérer (9) et la pile de plaques (1) reposant sur celle-ci pour que la plaque la plus inférieure de la pile de plaques (1) se dégage des crans d'arrêt (3) portant la pile de plaques (1),
g) déplacer horizontalement les crans d'arrêt (3) de la zone de la pile de plaques (1),
h) relever encore la plaque à insérer (9) avec la pile de plaques (1) reposant sur celle-ci jusqu'à ce que les crans d'arrêt (3) se trouvent dans une zone en hauteur en dessous de la plaque à insérer (9),
i) déplacer horizontalement les crans d'arrêt (3) sous la plaque à insérer (9) et,
k) abaisser la plaque à insérer (9) et la pile de plaques (1) reposant sur celle-ci jusqu'à ce qu'elle repose sur les crans d'arrêt (3).

4. Procédé selon l'une des revendications précédentes, **caractérisé en ce qu'**à la fois les étapes de procédé a) à f) et les étapes de procédé g) à k) sont exécutées avec le même dispositif.

5. Procédé selon l'une des revendications précédentes, **caractérisé en ce que** les crans d'arrêt (3) sont déplacés de la zone de la pile de plaques (1, 2), lorsqu'une plaque est relevée ou abaissée en passant devant eux.

6. Procédé selon l'une des revendications précédentes, **caractérisé en ce qu'**une plaque (9) retirée d'une première pile de plaques (1) est insérée dans une pile de plaques avoisinante.

7. Procédé selon l'une des revendications précédentes, **caractérisé en ce que** la plaque retirée et/ou à insérer est transportée horizontalement.

8. Dispositif pour retirer et insérer une plaque par le bas d'une respectivement dans une pile de plaques (1, 2) avec
- au moins une installation de levage (5) pour relever et abaisser verticalement une plaque (9) et/ou une pile de plaques (1, 2), et
- au moins une installation de retenue de plaques (4) avec au moins deux crans d'arrêt (3) pour retenir les plaques (9) ou la pile de plaques (1, 2), **caractérisé en ce que** l'installation de levage (5) présente un support de plaque (6) qui peut être amené à tourner autour d'un angle de rotation prédéfini et **en ce que** le support de plaque (6) présente une came horizontale (13).

9. Dispositif selon la revendication 8, **caractérisé en ce que** le cran d'arrêt (3) de l'installation de retenue de plaques (4) présente une came verticale (14) qui coopère avec la came horizontale (13) du support de plaque (6).

10. Dispositif selon l'une des revendications 8 ou 9, **caractérisé en ce que** l'installation de retenue de plaque (4) présente une installation de précontrainte (15) pour appliquer la came verticale (14) à la came horizontale (13) du support de plaque (6).

11. Dispositif selon la revendication 10, **caractérisé en ce que** l'installation de précontrainte (15) est un poids ou un ressort.

12. Dispositif selon l'une des revendications 8 à 11, **caractérisé en ce que** la face de commande de la came horizontale (13) est réalisée de façon à déplacer les crans d'arrêt (3), lors d'une rotation du support de plaque (6) lors d'un premier mouvement de rotation, contre l'installation de précontrainte (15) radialement vers l'extérieur et de la zone de la pile de plaques (1), et lors d'une rotation du support de plaque (6) lors d'un autre mouvement de rotation, permet un mouvement horizontal commandé des crans d'arrêt (3) radialement vers l'intérieur dans la zone de la pile de plaques (9).

13. Dispositif selon l'une des revendications 8 à 12, **caractérisé en ce que** la face de commande de la came verticale (14) est réalisée de telle sorte que le cran d'arrêt (3), lors d'un abaissement de l'installation de levage (5), est déplaçable radialement vers l'intérieur dans la zone de pile de plaques (9), et lors d'un relevage de l'installation de levage (5) radialement vers l'extérieur de la zone de la pile de plaques (1).

14. Dispositif selon l'une des revendications 8 à 13, **caractérisé par** une bande de transport horizontale (8) pour transporter la plaque retirée et/ou à insérer (9).

15. Dispositif selon l'une quelconque des revendications 8 à 14, **caractérisé en ce que** sont prévues au moins deux piles de plaques avec au moins à chaque fois une installation de levage et au moins deux installations de retenue de plaques.

16. Dispositif selon la revendication 15, **caractérisé en ce que** les installations de levage (5) présentent une installation d'entraînement - de levage commune.

17. Dispositif selon l'une des revendications 15 ou 16, **caractérisé en ce que** les supports de plaque (6) d'au moins deux installations de levage (5) présentent un dispositif d'entraînement en rotation commun (10, 11).

18. Dispositif selon l'une des revendications 8 à 17, **caractérisé en ce que** les plaques (9) sont réalisées comme palettes pour la réception de disques ou de substrats.

19. Dispositif selon l'une des revendications 8 à 18, **caractérisé en ce que** les plaques (9) présentent dans la zone médiane un tenon vertical faisant saillie vers le haut qui centre dans la pile de plaques (1, 2), la plaque située au dessus.

20. Dispositif selon l'une des revendications 8 à 19, **caractérisé en ce que** les zones extérieures des plaques (9) dans la pile de plaques (1, 2) sont espacées entre elles.

21. Dispositif selon l'une des revendications 18 à 20, **caractérisé en ce que** les disques sont des supports de données optiques.

22. Dispositif selon l'une des revendications 8 à 21, **caractérisé en ce que** la pile est disposée dans un cylindre dans lequel les plaques, palettes et/ou disques sont exposés à un flux d'un moyen de traitement, en particulier d'un agent de refroidissement.
